# EUROPEAN PATENT APPLICATION

(11) **EP 0 989 663 A2**
(43) Date of publication of application: **29.03.2000**
(21) Application number: 99118264.3
(22) Date of filing: 15.09.1999
(51) Int. Cl.: H02M 5/257

(54) **Circuit for reducing voltage fluctuation and flicker**

(30) Priority: 25.09.1998 JP 27164098
(71) Applicant: FUJI PHOTO FILM CO., LTD., Kanagawa-ken (JP)
(72) Inventor: Yoshizawa, Masafumi, Odawara-shi, Kanagawa (JP)
(74) Representative: Roerboel, Leif

(57) **Abstract**

When a switch of a load component is turned on, current flows from a rated AC power supply to a zerocross detection circuit. In the zerocross detection circuit, zerocross points of a waveform of current are detected and input to an output control circuit. The output control circuit selects in advance a sampling pattern and inputs a signal corresponding to this sampling pattern to an SSR by counting the zerocross points. In accordance with the sampling pattern, the SSR repeats a conductive state and a non-conductive state with a cycle of the waveform of current being one unit. In the conductive state, the current flows from the rated AC power supply to the load components. In this way, the average value of the current flowed to the load components is reduced at a predetermined rate with respect to entire output of the rated AC power supply.

## Description

### BACKGROUND OF THE INVENTION

### Field of the Invention

The present invention relates to a circuit for reducing voltage fluctuation and flicker, and more particularly, to a circuit for reducing voltage fluctuation and flicker which, when a plurality of loads are turned on/off at arbitrary timings, is used for supplying electrical power to at least one of the loads. Description of the Related Art

Usually, when an electric appliance is used, electrical power is supplied from one power supply to a plurality of electric appliances. By turning on/off a switch for starting/finishing the supply of electrical power to the electric appliances, the electric appliances are independently operated/stopped.

Further, the electric appliance includes a plurality of load components and starts/stops supplying electrical power, which is supplied from the power supply to the electric appliance, to the load components at predetermined timings. For example, a photosensitive planographic printing plate processing apparatus (hereinafter, "PS plate processor"), in which a photosensitive planographic printing plate (hereinafter, "PS plate") is processed in a processing solution, controls a heater which heats a developing solution, a heater for generating drying air supplied to a drying section in which the PS plate processed in the processing solution is dried, or the like so that the heaters are independently turned on/off.

When the power supply switch of the electric appliance or the load component (hereinafter, these will be collectively referred to as "load") is turned on, electric current flowed to the electric appliance is rapidly raised from zero, and when the power supply switch is turned off, the current flowed thereto is rapidly fallen to zero. At this time, when the other loads (hereinafter, "peripheral loads") are operated, voltage applied to the peripheral loads fluctuates temporarily. The larger the electrical power consumption of the load which is turned on/off, the more conspicuous the voltage fluctuation.

When the fluctuating width of the voltage fluctuation is large, the operations of the peripheral loads are unstable. Further, when the fluctuation having short cycles continues, flickering phenomena called flicker occurs. As a result, it is necessary to control the voltage fluctuation within a certain range when the switch is turned on or off.

For example, in European Standards EN61000-3-3 (IEC1000-3-3) which defines the limitations of voltage fluctuation and flicker, with respect to stationary voltage (230 V in case of an appliance for business, e.g., the above PS plate processor), the fluctuation of voltage must be within 3 %, the maximum relative fluctuation (the difference between the largest and smallest voltage of fluctuation) must be within 4 %, and continuity of a state in which the relative fluctuation is 3 % or more must be within 200 msec.

### SUMMARY OF THE INVENTION

An object of the present invention is to provide a circuit for reducing voltage fluctuation and flicker which controls voltage fluctuation to peripheral loads caused by on/off of a load within a predetermined range.

In order to achieve the above-described object, a first aspect of the present invention is a circuit for reducing voltage fluctuation and flicker which, when each of a plurality of loads is turned on/off at an arbitrary timing, is used for supplying electrical power to at least one of the loads, comprising: a power supply which supplies electrical power to the loads at a predetermined rated AC voltage; a zerocross detection circuit which detects zerocross points from a waveform of current of the power supply; and a switching circuit which, on the basis of the detected zerocross points, effects sampling output and flows electrical power to the loads in accordance with a predetermined pattern in which one cycle of the waveform of current is one unit.

In accordance with the first aspect, voltage/current having a predetermined waveform (sinusoidal wave) is supplied from the power supply. In order to catch the cycle of this waveform, the zerocross detection circuit detects timing in which the waveform of current is zero ("zerocross points"). By counting the zerocross points, the pattern in which a cycle of the waveform of current is one unit can be formed. The switching circuit samples the current in accordance with this pattern and outputs to the loads. Namely, control which reduces average current flowed to the loads at a predetermined rate is effected (hereinafter, "sampling control").

Accordingly, rapid changes in the current flowed to the loads can be prevented by effecting this sampling control when the load is turned on/off. In this way, voltage fluctuation and flicker to the other loads caused by the on/off of the load can be prevented.

A second aspect of the present invention is a circuit for reducing voltage fluctuation and flicker which, when each of a plurality of loads is turned on/off at an arbitrary timing, is used for supplying electrical power to at least one of the loads, comprising: a power supply which supplies electrical power to the loads at a predetermined rated AC voltage; duty setting means which sets duty of each cycle of a waveform of current of the power supply to from 0 % to 100 %; and a switching circuit which, on the basis of the duty set by the duty setting means, outputs electrical power of at least one of a time in which supply of electrical power to the loads is started and a time in which supply of electrical power to the loads is finished by changing this duty one of continuously and intermittently and flows electrical power to the loads.

In the second aspect, the switching circuit can control the amount of current flowed from the power supply to the loads to from 0 % to 100 % in accordance with the duty set by the duty setting means. When the duty setting means changes and sets the duty continuously or in stages, the current flowed from the power supply to the loads is controlled so that the current changes continuously or in stages in accordance with this duty (hereinafter, "duty control").

Consequently, rapid changes in the current flowed to the loads can be prevented by carrying out this duty control when the load is turned on/off. In this way, voltage fluctuation and flicker to the other loads caused by the on/off of the load can be prevented.

Note that the above-described sampling control and duty control may be used for controlling the operating force of the load (e.g., the amount of heat supplied from the heater or the like).

### BRIEF DESCRIPTION OF THE DRAWINGS

Fig. 1 shows a block diagram of a schematic structure of a first embodiment.

Fig. 2 shows a block diagram of a schematic structure of a second embodiment when step control is effected.

Fig. 3 shows a block diagram of a schematic structure of the second embodiment when continuous control is effected.

Fig. 4A is a diagram which shows an example of an output waveform from a rated AC power supply of the first embodiment.

Fig. 4B is a diagram which shows an example of an output waveform from a zerocross detection circuit of the first embodiment.

Fig. 4C is a diagram which shows an example of an output waveform from an output control circuit of the first embodiment.

Fig. 4D is a diagram which shows an example of an output waveform from an SSR of the first embodiment.

Fig. 5A is a diagram which shows an example of a sampling pattern of current in sampling control in the first embodiment and shows a 1 : 1 output pattern.

Fig. 5B is a diagram which shows an example of a sampling pattern of current in the sampling control in the first embodiment and shows a 1 : 2 output pattern.

Fig. 5C is a diagram which shows an example of a sampling pattern of current in the sampling control in the first embodiment and shows a 1 : 3 output pattern.

Fig. 5D is a diagram which shows an example of a sampling pattern of current in the sampling control in the first embodiment and shows a 2 : 2 output pattern.

Fig. 5E is a diagram which shows an example of a sampling pattern of current in the sampling control in the first embodiment and shows a 3 : 3 output pattern.

Fig. 6A is a diagram which shows an example of an output waveform from a triac circuit in the second embodiment and shows an output waveform when duty is 25 %.

Fig. 6B is a diagram which shows an example of an output waveform from the triac circuit in the second embodiment and shows an output waveform when duty is 50 %.

Fig. 6C is a diagram which shows an example of an output waveform from the triac circuit in the second embodiment and shows an output waveform when duty is 75 %.

Fig. 6D is a diagram which shows an example of an output waveform from the triac circuit in the second embodiment and shows an output waveform when duty is 100 %.

Fig. 7A is a diagram which shows an example of changes in effective voltage applied to a load component in the second embodiment when the load component which is turned on is subjected to two-step duty control.

Fig. 7B is a diagram which shows an example of changes in effective voltage applied to the load component in the second embodiment when the load component which is turned on is subjected to three-step duty control.

Fig. 7C is a diagram which shows an example of changes in effective voltage applied to the load component in the second embodiment when the load component which is turned on is subjected to four-step duty control.

Fig. 8A is a diagram which shows an example of changes in effective voltage applied to the load component in the second embodiment when the load component is subjected to two-step on/off duty control.

Fig. 8B is a diagram which shows an example of changes in effective voltage applied to the load component in the second embodiment when the load component is subjected to four-step on/off duty control.

Fig. 8C is a diagram which shows an example of changes in effective voltage applied to the load component in the second embodiment when the load component is subjected to three-step on/off duty control.

Fig. 9A is a diagram which shows an example of changes in effective voltage applied to the load component in the second embodiment when the load component which is turned on is subjected to two-step half output duty control.

Fig. 9B is a diagram which shows an example of changes in effective voltage applied to the load component in the second embodiment when the load component which is turned on/off is subjected to two-step half output duty control.

Fig. 9C is a diagram which shows an example of changes in effective voltage applied to the load component in the second embodiment when the load component which is turned on/off is subjected to one-step half output duty control.

Fig. 10A is a diagram which shows an example of changes in an output waveform when the load component in the second embodiment which is turned on/off is subjected to continuous duty control.

Fig. 10B is a diagram which shows an example of changes in effective voltage when the load component in the second embodiment which is turned on/off is subjected to continuous duty control.

Fig. 11A is a diagram which shows changes with time, in current flowed to the load component in the second embodiment which is subjected to duty control and shows changes in the current in the respective step controls shown in Figs. 7A to 7C and Figs. 8A to 8C.

Fig. 11B is a diagram which shows changes with time, in current flowed to the load component in the second embodiment which is subjected to duty control and shows changes in the current in the respective half output controls shown in Figs. 9A to 9C.

Fig. 12 is a diagram which shows control starting timings when a plurality of load components are controlled.

Fig. 13 shows a schematic structural view of an embodiment (PS plate processor).

Fig. 14 shows a schematic block diagram of the embodiment.

Fig. 15 is a diagram which shows changes in temperature of a developing solution when sampling control is effected and when sampling control is not effected.

### DESCRIPTION OF THE PREFERRED EMBODIMENTS

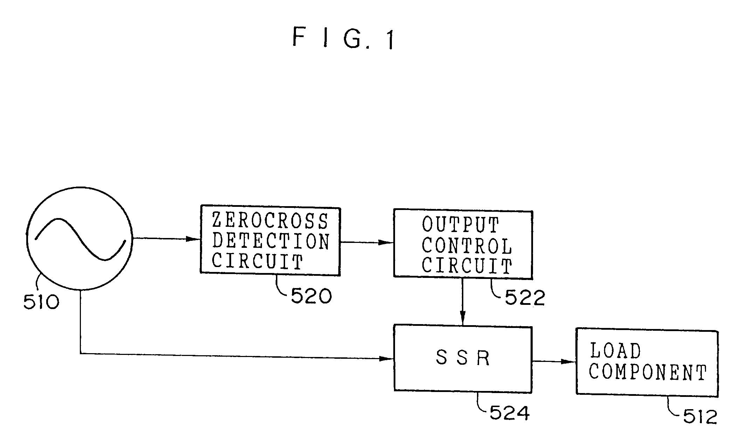

Fig. 1 shows a block diagram of a schematic structure of a first embodiment.

A rated AC power supply 510 is connected to a zerocross detection circuit 520. This zerocross detection circuit 520 detects zerocross points of current from the rated AC power supply 510.

An output of the zerocross detection circuit 520 is connected to an output control circuit 522. In this output control circuit 522, a sampling pattern in which a cycle of a waveform of current of the rated AC power supply 510 is one unit can be selected. By counting zerocross points detected by the zerocross detection circuit 520, the output control circuit 522 outputs a high level/low level signal or a pulsed (square wave) signal which corresponds to the selected sampling pattern.

An output of the output control circuit 522 is connected to an SSR (Solid-Stade Relay) 524. This SSR 524 receives an input from the above-described rated AC power supply 510 and is connected to a load component 512 to output thereto. This load component 512 is operated by electrical power such as a heater, a motor, or a lamp.

The SSR 524 is conductive only while the high level signal or the pulsed signal is input from the output control circuit 522 and flows current from the rated AC power supply 510 to the load component 512.

Next, operation of the first embodiment will be explained.

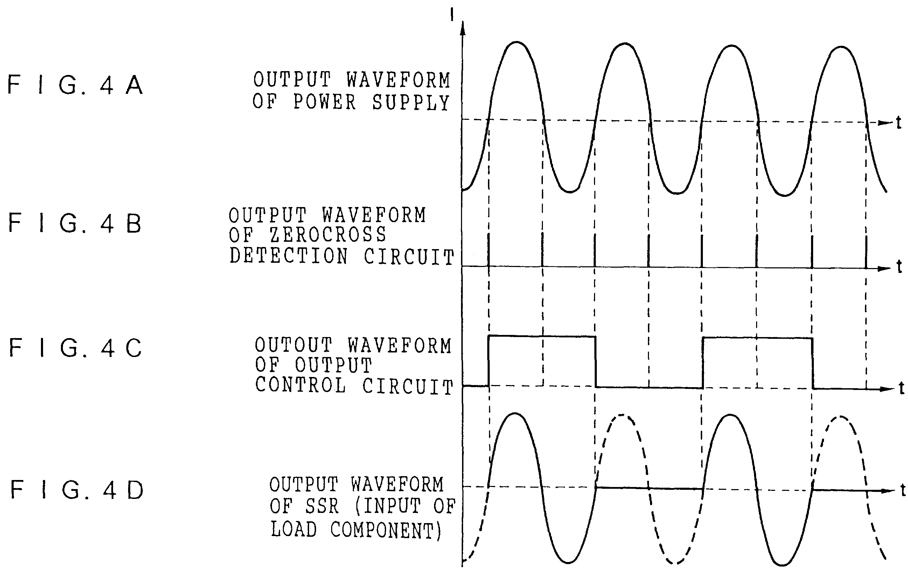

When an unillustrated switch of the load component 512 is turned on, current flows from the rated AC power supply 510 to the zerocross detection circuit 520. Fig. 4A shows a waveform of current which is output from the rated AC power supply 510 to the zerocross detection circuit 520.

The zerocross detection circuit 520 detects zerocross points of the waveform of current and inputs the zerocross points to the output control circuit 522. Fig. 4B shows results of detection of the zerocross points of the current shown in Fig. 4A.

The output control circuit 522 selects in advance the sampling pattern. The output control circuit 522 counts zerocross points of the waveform of current and inputs a signal corresponding to this sampling pattern to the SSR 524. For example, when the current is samplened every other cycle, as shown in Fig. 4C, a signal which repeats high level and low level is output whenever two zerocross points are counted.

The SSR 524 is conductive only while the high level signal is input and flows current from the rated AC power supply 510 to the load component 512. Fig. 4D shows a waveform of current flowed to the load component 512 when the signal shown in Fig. 4C, in which the current is sampled every other cycle, is input to the SSR 524. Since the current flows to the load component 512 during the first cycle (conductive) and does not flow thereto during the subsequent cycle (non-conductive), such sampling pattern is defined as a 1 : 1 output pattern.

As described above, when the load component 512 is turned on, because the average value of the current flowed to the load component 512 can be reduced at a predetermined rate with respect to the entire output of the rated AC power supply 510, rapid changes in the current flowed to the load component 512 can be prevented. Further, the same control is also effected when the load component 512 is turned off.

In this way, voltage fluctuation and flicker of the other load components which is caused by turning on/off of the load component 512 can be prevented.

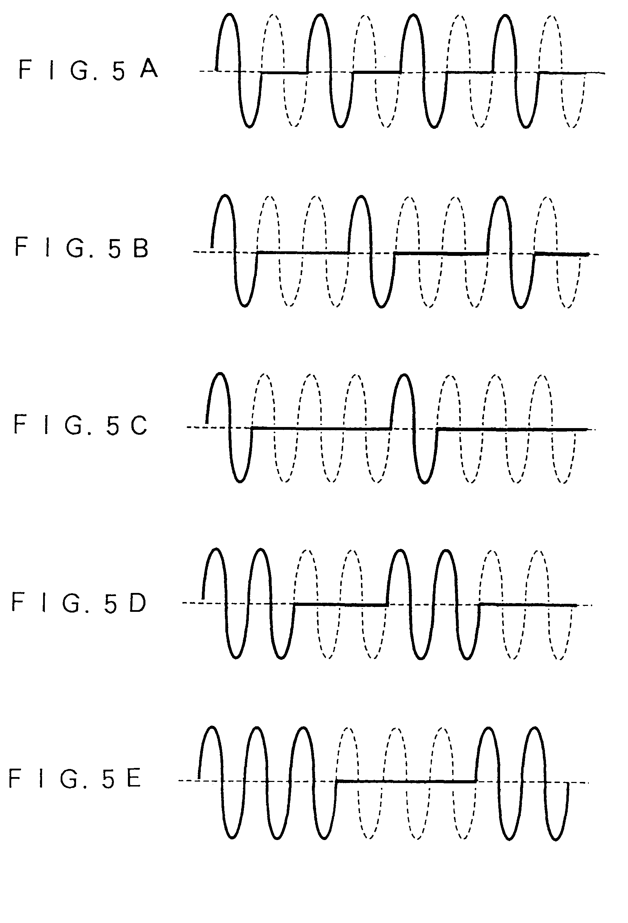

In the above description, the 1 : 1 output pattern (Fig. 5A), in which the current is sampled every other cycle, is used as an example. However, in addition to this, the sampling control may be effected in accordance with a 1 : 2 output pattern (Fig. 5B), a 1 : 3 output pattern (Fig. 5C), a 2 : 2 output pattern (Fig. 5D), or a 3 : 3 output pattern (Fig. 5E). Moreover, the sampling control may be effected in accordance with the other sampling patterns.

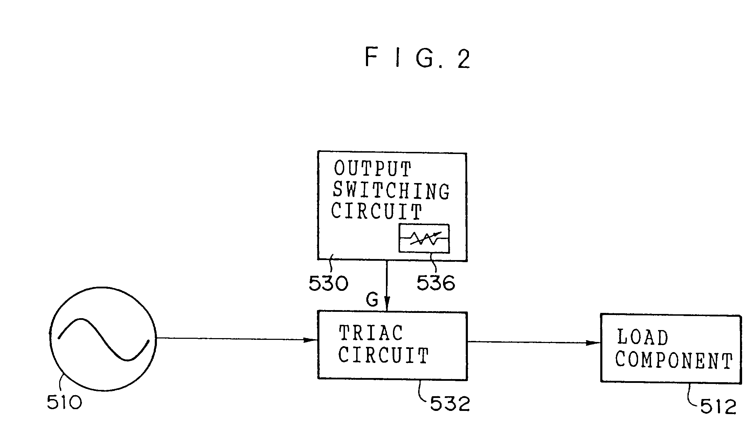

Fig. 2 shows a block diagram of a schematic structure of a second embodiment.

An output switching circuit 530 is connected to a gate of a triac circuit 532. This output switching circuit 530 includes a variable resistor (volume resistance) 536 and can switch the value of resistance in stages. The phase of gate trigger current (pulse) from the output switching circuit 530 to the triac circuit 532 can be changed in stages by the size of the value of resistance at this variable resistor 536.

The rated AC power supply 510 is connected to an input side of the triac circuit 532. Further, the load component 512 is connected to an output side of the triac circuit 532.

When the gate trigger current flows at the time when the waveform of voltage of the rated AC power supply 510 is a predetermined value or more, the input side of the rated AC power supply 510 and the output side of the load component 512 are conductive and the current starts to flow to both ends of the triac circuit 532.

Once the triac circuit 532 is conductive, the conductive state continues until the next waveform of voltage of the rated AC power supply 510 is zero. When the waveform of voltage is zero, the triac cirucuit 532 is non-conductive again. The conductive and non-conductive states repeat every half cycle of the sinusoidal waveform of voltage of the rated AC power supply 510. During one cycle of the waveform of current, the current (effective current) flowed to the load component 512 is reduced at a predetermined rate. The waveform of voltage changes in the same way as the waveform of current.

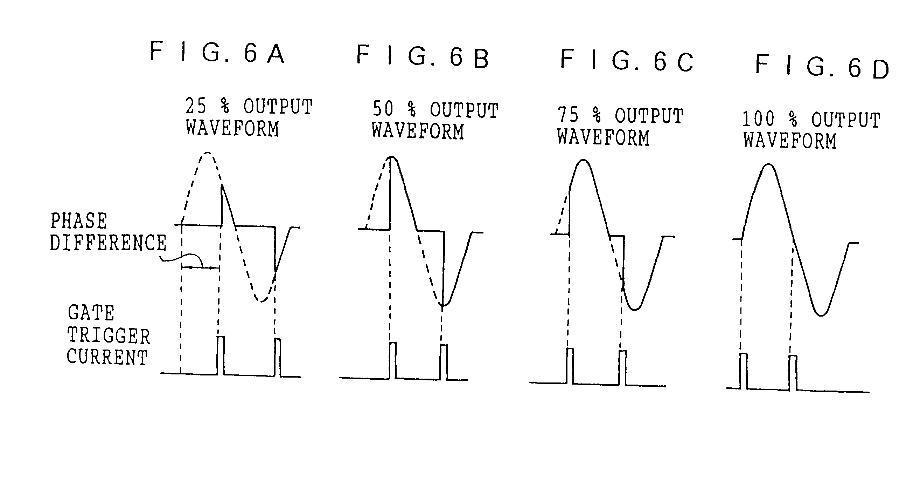

Figs. 6A through 6D show examples of output waveforms of the rated AC power supply 510 in dotted lines and output waveforms to the load component 512 in solid lines. Fig. 6A shows a waveform when duty is 25 %, Fig. 6B shows a waveform when duty is 50 %, Fig. 6C shows a waveform when duty is 75 %, and Fig. 6D shows a waveform when duty is 100 %. The duty indicates a rate of the effective value of the input to the load component 512 to the effective value of the output from the rated AC power supply 510.

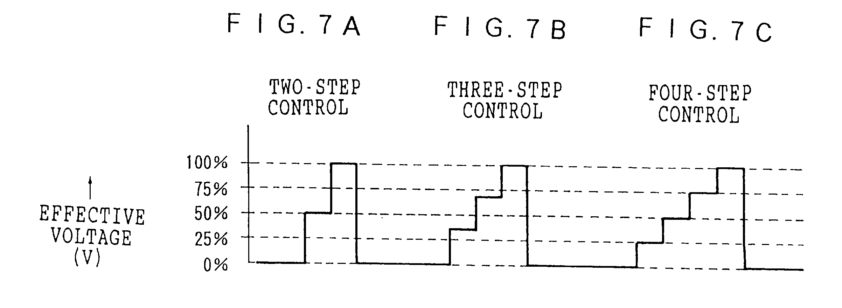

Next, operation of the second embodiment will be explained. A description will be given of an example in which duty becomes 100 % in the four-step duty control shown in Fig. 7C.

When an unillustrated switch of the load component 512 is turned on, the output switching circuit 530 is also turned on. The variable resistor 536 is set to a value of resistance so that current in which duty is 25 % is output from the output switching circuit 530.

When gate trigger current in which duty is 25 % flows from the output switching circuit 530 to the triac circuit 532, the triac circuit is conductive and the current flows to the load component 512. When the waveform of voltage of the rated AC power supply 510 is zero, the conductive state is finished and the current does not flow to the load component 512. The conductive state and the non-conductive state are repeated every half cycle of the waveform of voltage of the rated AC power supply 510, and the current having waveform shown in Fig. 6A in which duty is 25 % flows to the load component 512. The waveform of voltage applied to the load component 512 is the same as the waveform of the current.

Next, the value of resistance of the variable resistor 536 is reduced in stages so that the current in which duty is 50 %, 75 %, and 100 % is output from the output switching circuit 530. Accordingly, the gate trigger current from the output switching circuit 530 to the triac circuit 532 corresponds to the current in which duty is 50 %, 75 %, and 100 %. Consequently, the phase of the gate trigger current is quicker (the phase difference is smaller) and the waveform of the current flowed to the load component 512 changes so that the current increases in stages from Fig. 6B, Fig. 6C, to Fig. 6D. The waveform of voltage applied to the load component 512 changes in the same way as the waveform of the current.

By changing the value of resistance of the variable resistor 536 as described above, the effective voltage applied to the load component 512 is controlled so as to increase in stages and become 100 % in the fourth step (equal to the effective voltage of the rated AC power supply 510) as shown in Fig. 7C. This is referred to as "four-step control".

The control which is carried out when the load component 512 is turned on is not limited to the four-step control. As shown in Figs. 7A and 7B, a two-step control (Fig. 7A) or a three-step control (Fig. 7B) may be effected. Other step controls may be carried out as well.

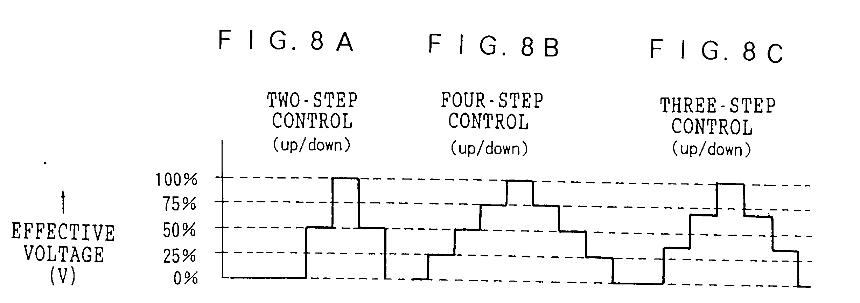

In addition to the case when the load component 512 is turned on, as shown in Figs. 8A through 8C, when the load component 512 is turned off, it is possible that the effective current flowed to the load component 512 and the effective voltage applied thereto are controlled so as to decrease in stages and become zero in a sequence opposite the sequence at the time of turning on. Fig. 8A shows an example of two-step on/off control, Fig. 8B shows that of four-step on/off control, and Fig. 8C shows that of three-step on/off control.

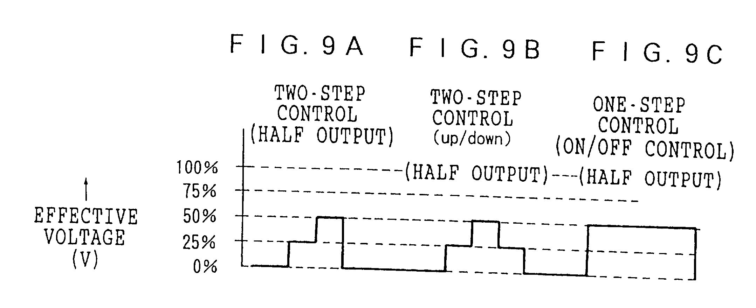

Further, the effective current flowed to the load component 512 and the effective voltage applied thereto may be subjected to half output control which controls the current and the voltage up to, for example, 50 % and not up to 100 %. Fig. 9A shows an example of two-step half output control at the time of turning on, Fig. 9B shows that of two-step half output control at the time of turning on/off, and Fig. 9C shows that of one-step half output control at the time of turning on/off.

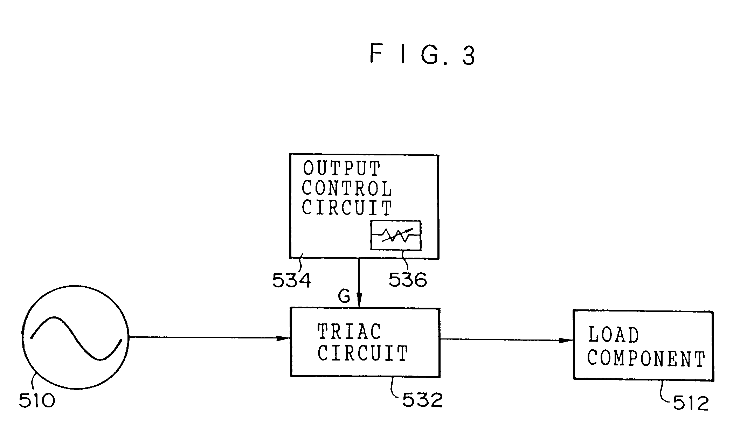

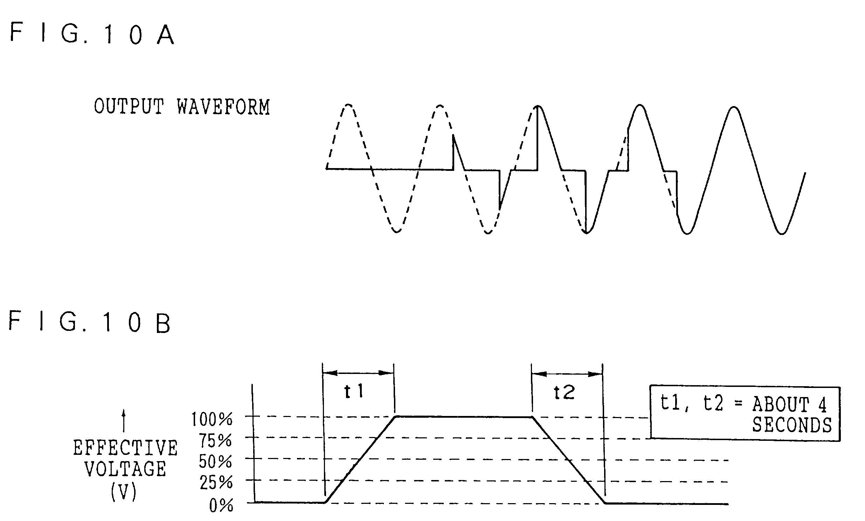

Instead of the output switching circuit 530, an output control circuit 534 which can continuously change the value of resistance of the variable resistor 536 may be used (see Fig. 3). Fig. 10A shows an example of changes in output waveform from the triac circuit 532 to the load component 512, and Fig. 10B shows an example of changes in effective voltage of the load component 512 wherein time is on the axis of abscissas and effective voltage applied to the load component 512 is on the axis of ordinates, when the output control circuit 534 is used. As shown in Figs. 10A and 10B, the current flowed to the gate of the triac circuit 532 can be continuously changed by using this output control circuit 534. A rise time t1 of the voltage of the load component 512 (the time required for the effective voltage to change from 0 % to 100 %) and a fall time t2 of the voltage thereof (the time required for the effective voltage to change from 100 % to 0 %) are determined by influence applied to a peripheral load. In the present embodiment, both tl and t2 are set to about four seconds.

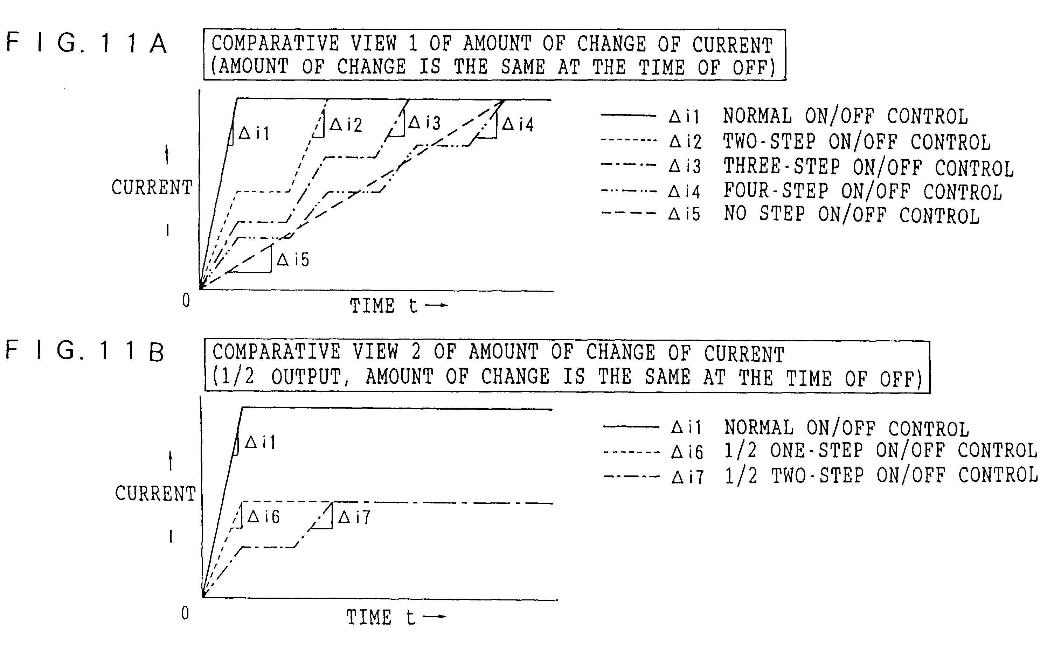

Figs. 11A and 11B show the amount of change of the effective current flowed to the load component 512 wherein time is on the axis of abscissas and current flowed to the load component 512 is on the axis of ordinates. In Fig. 11A, a solid line denotes conventional control in which duty control is not effected, a dotted line denotes two-step control, a single-dashed chain line denotes three-step control, a double-dashed chain line denotes four-step control, and a chain line denotes continuous control. In Fig. 11B, a solid line denotes conventional control in which duty control is not effected, a dotted line denotes one-step half output control, and a single-dashed chain line denotes two-step half output control. The amount of change of the effective current when the load component 512 is turned off is the same.

As can be seen from Figs. 11A and 11B, when the load component is turned on, the amount of change of the present embodiment which effects duty control is smaller than the amount of change of current of the conventional control which does not effect duty control. Accordingly, in the present embodiment, when the power supply of the load component 512 is turned on, the large amount of current rapidly flowing to the load component 512 can be prevented, and when the power supply is turned off, the rapid reduction in the current flowing to the load component 512 can be prevented by effecting the same duty control. In this way, voltage fluctuation to the other load components by turning on/off of the load component 512 is reduced and the flicker can be controlled.

In the output switching circuit 530 and the output control circuit 534, the variable resistor 536 effects duty control by changing the size of gate current of the triac circuit 532. However, the duty control may be effected by inputting current, in which the phase of the rated AC power supply 510 is changed, to the gate of the triac circuit 532.

By the way, when a plurality of loads are controlled using the above-described first or second embodiment, if two or more loads are turned on/off simultaneously, the effect of reducing voltage fluctuation as mentioned above cannot be reliably obtained and the operation of the other loads may be affected. Consequently, the plurality of loads are controlled so that two or more loads are not turned on/off simultaneously.

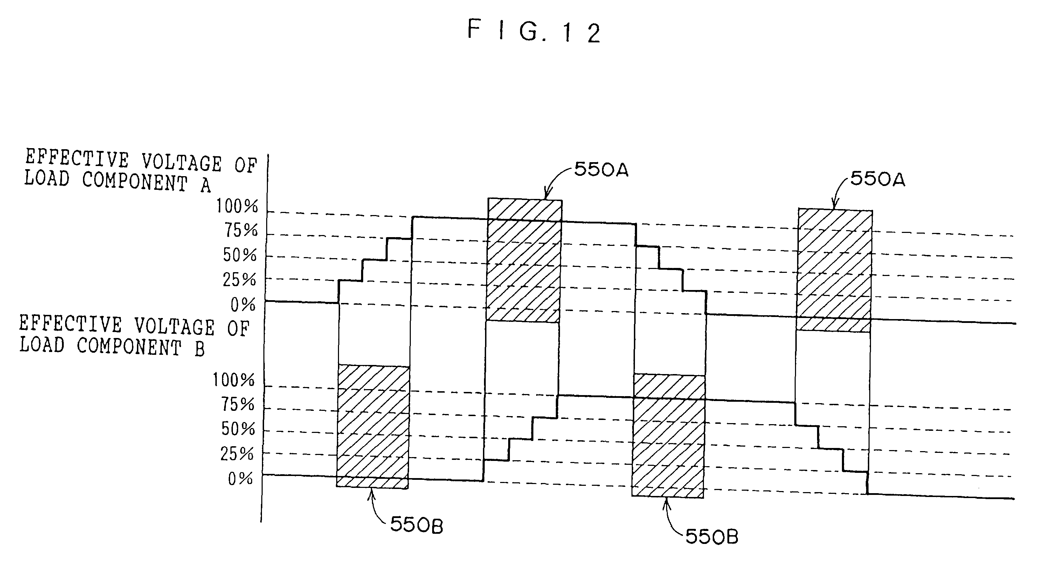

For example, when two load components A and B are subjected to four-step on/off control (Fig. 12), even if the load component B is turned on/off at the time of raising/fall time 550A of on/off of the load component A, control which shifts the time of starting the operation of the load component B is effected so that the on/off operation of the load component B is started after the raising/fall time 550A of on/off of the load component A. In the same way, when the load component A is turned on/off at the time of raising/fall time 550B of on/off of the load component B, control which shifts the time of starting the operation of the load component A is effected.

In this way, even when a plurality of loads are controlled using the above-described first or second embodiment, the voltage fluctuation to the other loads caused by on/off of the load is reliably reduced and the flicker can be controlled.

An embodiment (PS plate processor) of the present invention will be described hereinafter.

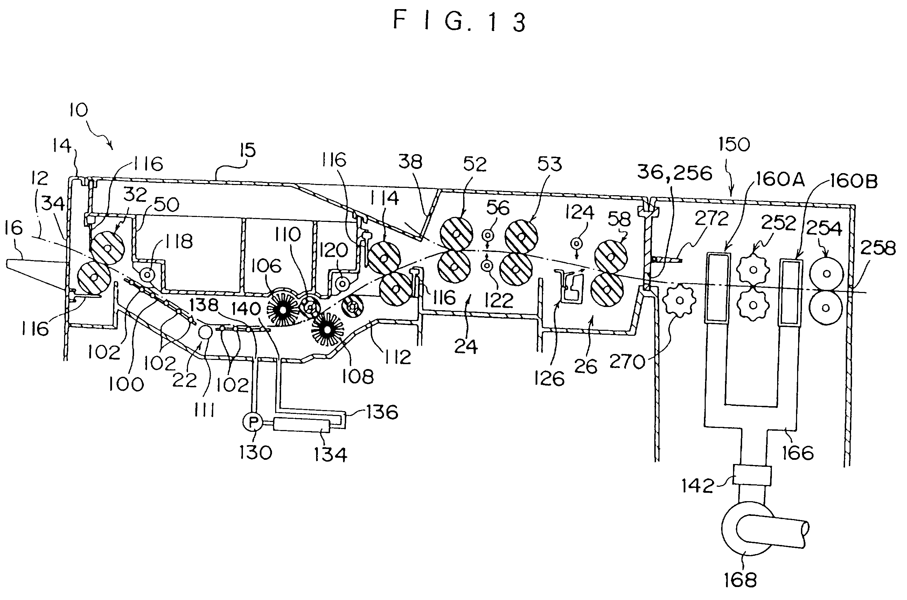

Fig. 13 shows a schematic structural view of the present embodiment.

Fig. 13 shows a PS plate processor 10 to which the above-described first embodiment is applied. In the PS plate processor 10, a PS plate 12, onto which images are printed by an unillustrated printing device, is processed in a processing solution.

The PS plate processor 10 is provided with a developing section 22 which develops the PS plate 12, a washing section 24 which washes the developing solution applied to the PS plate 12, a finisher section 26 which applies gum solution to the washed PS plate 12 and effects desensitizing processing, and a drying device 150.

A slit-shaped insertion opening 34 and a discharge opening 36 are respectively provided at an outer plate panel 14. An insertion stand 16 is attached to the exterior of the insertion opening 34 and guides insertion of the PS plate 12 through the insertion opening 34.

A lid 15 is placed on the upper surface of the outer plate panel 14 and is provided with an insertion opening for reentry (auxiliary insertion opening) 38 which inserts the PS plate 12 between the developing section 22 and the washing section 24. The auxiliary insertion opening 38 is an insertion opening of the PS plate 12 for effecting processing other than the processing by the developing solution.

A pair of conveying rollers 32 made of rubber are provided on the side of the developing section 22 into which the PS plate 12 is inserted, and the PS plate 12, onto which the images are printed, is inserted between the pair of conveying rollers 32 from the insertion opening 34. The pair of conveying rollers 32 are rotated by the driving force of an unillustrated driving means and conveys the PS plate 12 to the developing section 22 at an angle of about 30° with respect to the horizontal direction.

The developing section 22 is substantially an inverse triangular processing tank in which the upper portion is opened and the bottom central portion protrudes downwardly. A guide plate 100 is provided at a lower side of this developing section 22 in the conveying direction of the PS plate 12.

A plurality of thin rollers (small rollers) 102 are attached to the guide plate 100 and the PS plate 12 is conveyed while being guided by the thin rollers 102. At this time, since the thin rollers 102 are rotated, damage due to sliding is not caused to the PS plate 12.

The guide plate 100 has a configuration which is formed along the inverse triangular configuration of the developing section 22, and a brush roller 106 is disposed at a position corresponding to the upper surface of the PS plate 12 on the downstream side of the lowest position of the guide plate 100. Further, a brush roller 108 is disposed in a vicinity of the distal end portion of the guide plate 100 so as to correspond to the lower surface of the PS plate 12. As the driving force of the unillustrated driving means is transmitted, the brush rollers 106 and 108 are rotated in the same direction as the direction the PS plate 12 is conveyed.

The brush rollers 106 and 108 have a function of scraping off an unnecessary photosensitive layer on the surface of the PS plate 12 which is swelled due to the developing processing in the developing section 22. In order to sufficiently achieve this function, it is necessary for the brush rollers 106 and 108 to press the PS plate 12 with a predetermined pressing force. As a result, some of the thin rollers 102 attached to the guide plate 100 correspond to the brush roller 106, and a skewered roller 110 which has a plurality of thin cylindrical roller attached to a core shaft with intervals therebetween correspond to the brush roller 108. In this way, the PS plate 12 is conveyed while contacting the brush rollers 106 and 108 at predetermined pressing force and the unnecessary photosensitive layer can be reliably removed.

On the side which is further downstream than the position at which the brush roller 108 and the skewered roller 110 are disposed, a skewered roller 112 is disposed so as to oppose the bottom surface of the PS plate 12 and supports the PS plate 12. The PS plate 12 which is supported and conveyed by this skewered roller 112 is discharged from the liquid surface of the developing section 22 and is nipped and conveyed by a pair of conveying rollers 114 made of rubber which are disposed at a final stage position of the developing section 22. Thus, the developing solution applied to the PS plate 12 can be squeezed therefrom.

An outflow opening 138 and an inflow opening 140 of the developing solution are provided at the bottom portion of the developing section 22. The outflow opening 138 and the inflow opening 140 are connected to the ends of a pipe 136 in which a pump 130 is attached to the intermediate portion. The developing solution of the developing section 22 is outflowed from the outflow opening 138 by this pump 130, and the outflowed developing solution is inflowed again through the pipe 136 into the developing section 22 from the inflow opening 140. The developing solution stored in the developing section 22 is constantly circulated by the pump 130.

A heater 134 is provided at a pipe 136 which is at a further downstream side of the pump 130. The developing solution guided by the pipe 136 is heated by passing through the heater 134. As a result of measurement of temperature of an unillustrated temperature sensor 132 which measures the temperature of the developing solution stored in the developing section 22, the heater 134 is controlled so as to be turned on/off.

A liquid surface lid 50 is disposed on the liquid surface of the developing solution in the developing section 22. This liquid surface lid 50 is disposed so that the lower surface thereof is lower than the liquid surface of the developing solution. Consequently, contact between the liquid surface of the developing solution and air is minimized as far as possible, and degradation of the developing solution by carbon dioxide and evaporation of water content within the developing solution is prevented.

A blade 116 is attached to each of the longitudinal ends of the liquid surface lid 50 in the direction the PS plate 12 is conveyed. The blades 116 are disposed so as to contact the upper and lower rollers of the upstream side conveying roller pair 32 and the downstream side conveying roller pair 114, and the developing solution is prevented from being exposed to outside air.

Further, skewered rollers 118 and 120 are respectively attached to the longitudinal corner portions on the lower surface of the liquid surface lid 50 in the direction the PS plate 12 is conveyed. The skewered rollers 118 and 120 have a function of preventing contact with the liquid surface lid 50 when the PS plate 12 is conveyed. In this way, even if slight slack is generated during the conveyance of the PS plate 12, the upper surface of the PS plate 12 will not abut the liquid surface lid 50 or the like, which is hard enough to damage the photosensitive surface.

The conveying roller pair 114 on the downstream side of the developing section 22 are rotated by the driving force of unillustrated driving means and conveys the PS plate 12 to the washing section 24 which performs a subsequent processing.

The washing section 24 is provided with two conveying roller pairs 52 and 53. The conveying roller pairs 52 and 53 are rotated by the driving force of an unillustrated driving means and form a conveying path of the PS plate 12 conveyed from the developing section 22.

Spray pipes 56 and 122 are disposed between the conveying rollers 52 and 53 and above and below the conveying path. The spray pipes 56 and 122 are disposed along the axes of the conveying rollers 52 and 53, and an ejection opening which communicates with the inner portion is provided at each of a position of the spray pipes 56 and 122 which opposes the PS plate 12. Washing water which is pumped up by a pump from an unillustrated washing water tank is ejected from the spray pipes 56 and 122 and spreads rapidly across both surfaces of the PS plate 12. The both surfaces of the PS plate 12 are washed by the washing water.

A pair of conveying rollers 58 are provided at the finisher section 26 which is a desensitizing processing section and on the downstream side of the washing section 24. The PS plate 12 conveyed by the conveying rollers 53 is guided to the conveying rollers 58.

A spray pipe 124 is disposed on the upstream side of the conveying rollers 58 and above the conveying path. This spray pipe 124 is disposed parallel to the axis of the conveying rollers 58 and the ejection opening thereof is provided so as to face the PS plate 12. A gum solution which is pumped up by a pump from an unillustrated gum solution tank is ejected onto the PS plate 12 from the spray pipe 124 and spreads across the surface of the PS plate 12. A protecting membrane is formed on the surface of the PS plate 12.

Further, an outflow unit 126, which is formed with slits which are continuous over the transverse direction of the PS plate 12, is disposed on the upstream side of the conveying rollers 58 and below the conveying path. The gum solution is supplied to the outflow unit 126 similarly to the spray pipe 124 and outflows from the slits. Namely, since the slits extend over the entire region in the transverse direction of the PS plate 12, a protecting membrane can be formed on the entire lower surface of the PS plate 12 by the gum solution.

The PS plate 12, to which the gum solution was applied in this finisher section 26, is nipped and conveyed by the conveying roller pair 58 and discharged from the ejection opening 36.

The drying device 150 is disposed on the downstream side of the finisher section 26, i.e., in the final processing section of the PS plate processor 10.

Two conveying roller pairs 252 and 254 are disposed at this drying device 150, and the conveying rollers 252 are placed in a vicinity of an insertion opening 256 of the drying device 150 and the conveying rollers 254 are placed in a vicinity of a discharge opening 258 thereof.

In this way, the PS plate 12 which was subjected to the processing in the finisher section 26 and discharged from the discharge opening 36 is inserted into the drying device 150 from the discharge opening 256 thereof. This drying device 150 can be separated from the processing section formed by the developing section 22, the washing section 24, and the finisher section 26, and a predetermined interval may be formed between the discharge opening 36 and the insertion opening 256.

Ducts 160A and 160B for blowing drying air to the PS plate are disposed between the two conveying roller pairs 252 and 254. The ducts 160A and 160B are formed substantially U-shaped and disposed so as to surround the conveying path of the PS plate 12.

The one end surfaces of the ducts 160A and 160B are connected to a drying air guide duct 166. This drying air guide duct 166 is formed in the shape of rectangular chimney and the lower end opening thereof is connected to a discharge opening of a blower 168 shown in Fig. 13. Moreover, the upper end portion of the drying air guide duct 166 is bent substantially 90° in the direction of the ducts 160A and 160B and is divided into two so as to correspond to the ducts 160A and 160B.

A heater 142 is disposed at an intermediate portion between the blower 168 of the drying air guide duct 166 and the divided portion. Air is heated by this heater 142 while being guided into the drying air guide duct 166 and becomes drying air.

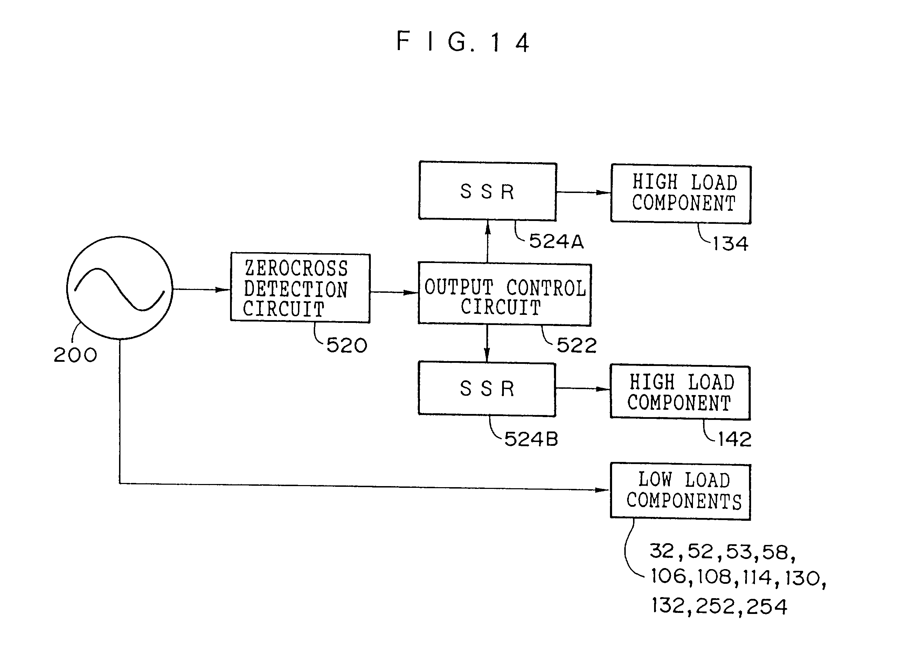

By the way, as shown in Fig. 14, load components which use the electrical power of the PS plate processor 10 as a driving source are connected to a power supply 200 of the PS plate processor 10 in two ways.

First, the conveying roller pairs 32, 52, 53, 114, 252, 254, the brush rollers 106 and 108, the pump 130, and the other unillustrated load components which consume a small amount of electrical power (all of these will be hereinafter referred to as "low load components") are connected to the power supply 200 without passing through the triac circuit or the SSR.

On the other hand, because the heaters 134 and 142 which consume a large amount of electrical power (all of these will be hereinafter referred to as "high load components") provide large width of voltage fluctuation to the other load components at the time of turning on/off, the high load components are connected to the power supply 200 via an SSR 524A or 524B as described in the aforementioned first embodiment. The power supply 200 is a 230 V rated AC power supply.

Operation of the present embodiment will be explained hereinafterr.

When an unillustrated power supply switch of the PS plate processor 10 is turned on, the pump 130 is driven and the developing solution stored in the developing section 22 begins to be circulated in the pipe 136. Further, the temperature of the developing solution stored in the developing section 22 is measured by the unillustrated temperature sensor 132. When this temperature is lower than the predetermined temperature, the heater 134 is turned on, the developing solution guided into the pipe 136 is heated, and the heated developing solution is returned to the developing section 22. In this way, the developing solution in the developing section 22 is gradually heated, and when the temperature measured by the unillustrated temperature sensor 132 reaches a predetermined value, the heater 134 is turned off. While the PS plate processor 10 is operated, the temperature of the developing solution within the developing section 22 is set within the predetermined range due to the on/off control of the heater 134.

When the temperature of the processing solution in the developing section 22 is set within the predetermined range, the PS plate 12, onto which images are recorded by an unillustrated printing device or the like, is placed onto the insertion stand 16, conveyed to the innermost side of the insertion stand 16, and inserted from the insertion opening 34. The inserted PS plate 12 is drawn in and conveyed to the developing section 22 by the pair of conveying rollers 32. When the leading end of the PS plate 12 passes through the insertion opening 34, the passage is detected by the sensor and a timer is started. This timer counts timing to eject washing water from the spray pipe 56 and 122 in the washing section 24 or timing to eject gum solution in the finisher section 26.

In the developing section 22, the PS plate 12 is guided from the pair of conveying rollers 32 to the guide plate 100 and is conveyed at an angle of 15° to 31° with respect to a horizontal direction. At this time, the PS plate 12 is supported by the thin rollers 102 provided at the guide plate 100 and the thin rollers 102 are rotated due to the conveyance of the PS plate 12. Therefore, damage due to sliding is not inflicted on the PS plate 12.

While the PS plate 12 is guided and conveyed by this guide plate 100 (in reality, the thin rollers 102), both surfaces of the PS plate 12 are brushed by the brush rollers 106 and 108. Due to this brushing, the swelled unnecessary photosensitive layer which is attached to the surface of the PS plate 12 can be removed.

In this way, after both surfaces of the PS plate 12 are scraped uniformly and the PS plate 12 is subjected to developing processing, the PS plate 12 is withdrawn from the developing section 22 while being squeezed by the conveying roller pair 114 and is conveyed to the washing section 24. The PS plate 12 is nipped and conveyed by the conveying roller pairs 52 and 53. At this time, the leading end of the PS plate 12 is guided so as to abut the lower roller of the conveying roller pair 52.

Thereafter, when the time which is measured by the timer reaches a predetermined time since the PS plate 12 was inserted and it is determined that the leading end of the PS plate 12 has reached the downstream side roller pair 53, the washing water is discharged from the spray pipes 56 and 122 onto both surfaces of the PS plate 12 and washes the PS plate 12.

When the washing processing is finished, the PS plate 12 is conveyed to the finisher section 26 and is nipped and conveyed by the conveying roller pair 58. The PS plate 12 is subjected to desensitizing processing by the gum solution outflowed from the spray pipe 124 and the outflow unit 126. The desensitized PS plate 12 passes through the discharge opening 36 and is conveyed from the finisher section 26 to the drying device 150.

In a standby state in which the PS plate 12 is not processed, the temperature in the drying device 150 is set lower than the set temperature for drying the PS plate 12 by 5°C. When the PS plate 12 is dried, the air blown from the blower 168 is heated by the heater 142 to the set temperature. The air is blown to the PS plate 12 from the ducts 160A and 160B as drying air.

Further, the PS plate 12 inserted from the insertion opening 256 is nipped and conveyed by the upstream side conveying roller pair 252 and is delivered to the downstream side conveying roller pair 254.

Between the two conveying roller pairs 252 and 254, the ducts 160A and 160B which discharge drying air are disposed above and below the conveying path of the PS plate 12. Because slits are provided on each surface of the ducts 160A and 160B which opposes the PS plate 12, the PS plate 12 is dried by this drying air.

While the PS plate processor 10 is operated, the low load components which consume a small amount of electrical power such as the conveying roller pairs 32, 52, 53, 114, 252, 254, the brush rollers 106 and 108, the pump 130, and the other unillustrated load components which consume a small amount of electrical power are turned on/off at predetermined timings and supply of electrical power from the power supply 200 is started/stopped.

On the other hand, in case of the heaters 134 and 142 which consume a large amount of electrical power, as described in the second embodiment, the current flowed to the heaters 134 and 142 is sampled in accordance with a predetermined sampling pattern at the time of turning on/off and the average current is controlled so as to increase/decrease.

In this way, the voltage fluctuation occurred to the other load components (any one of the heaters 134 and 142 which is not turned on/off and the low load components) due to the on/off of the heater 134 or 142 which consumes a large amount of electrical power is reduced and the flicker can be also prevented.

As mentioned above, the heaters 134 and 142 are controlled so that the heaters 134 and 142 are not turned on/off simultaneously (see Fig. 12).

In the above description, the sampling control described in the first embodiment is carried out when the heaters 134 and 142 are turned on/off. However, the present invention is not limited to this and the duty control described in the second embodiment may be effected.

By the way, the sampling control is not only for reducing the voltage fluctuation applied to the other load components when the heaters 134 and 142 are turned on/off, but also for controlling the amount of heat supplied from the heaters.

For example, in order to maintain the temperature of the developing solution in the developing section 22, when the temperature of the developing solution is lower than the predetermined temperature, the heater 134 is turned on and heats the developing solution, and when the temperature thereof is higher than the predetermined temperature, the heater 134 is turned off.

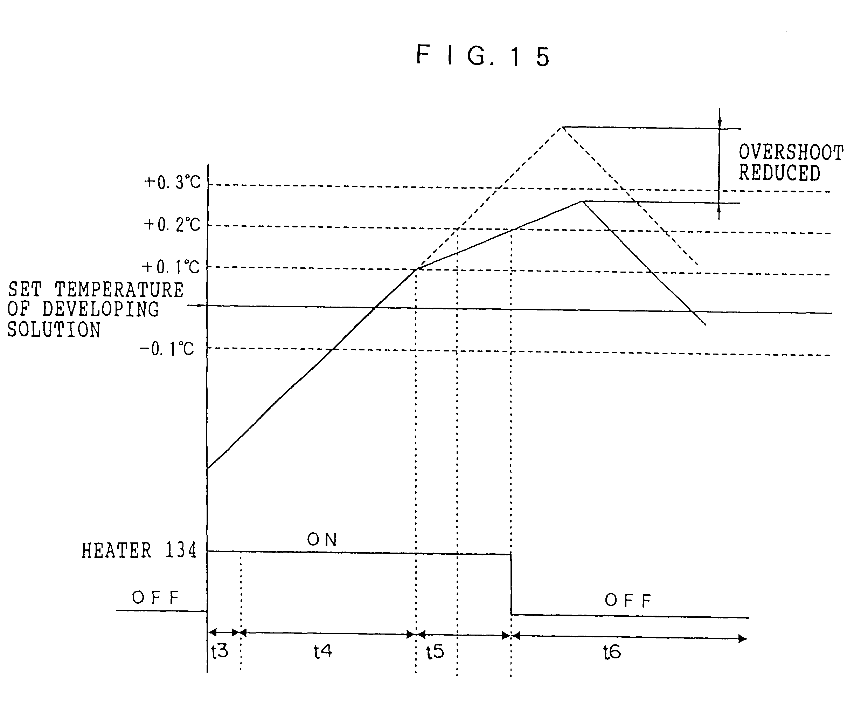

As shown in Fig. 15, when the temperature of the developing solution is lower than the predetermined temperature and the heater 134 is turned on, the sampling control mentioned in the first embodiment is effected during time t3, which is immediately after the heater 134 is turned on, so that the voltage fluctuation applied to the other load components is reduced. After time t3 has passed, ordinary operation is carried out (during time t4).

Thereafter, when the developing solution is heated so that the temperature thereof is higher than the predetermined set temperature by 0.1 degrees, the sampling control mentioned in the first embodiment is again effected so that the amount of heat supplied to the developing solution from the heater 134 is controlled (during time t5). In this way, (apparent) electrical power consumption of the heater 134 is reduced and the amount of heat supplied per unit of time is reduced. Thus, the rate of increase of the temperature of the developing solution is reduced. In order to distinguish this sampling control which controls the amount of heat supplied from the heater from the sampling control which reduces the voltage fluctuation applied to the other load components immediately after the heater 134 is turned on, the former will be hereinafter referred to as "sampling operation".

When the developing solution is heated so that the temperature thereof is higher than the predetermined set temperature by 0.2 degrees, the heater 134 is turned off (during time t6). However, the temperature of the developing solution further increases due to the remaining heat of the heater 134 for some time afterwards. When the heater 134 is cooled, the temperature of the developing solution gradually lowers.

In Fig. 15, a dotted line denotes the change of temperature of the developing solution which is not subjected to the sampling operation and a solid line denotes the change of temperature of the developing solution which is subjected to the sampling operation. Overshoot in which the developing solution is heated higher than the set temperature can be seen in both cases; however, the temperature of the developing solution which is not subjected to the sampling operation is higher.

Therefore, as can be also seen from Fig. 15, due to the sampling operation, overshoot in which the temperature of the developing solution is higher than the predetermined set temperature after the heater 134 is turned off can be reduced, and the accuracy of adjusting the temperature of the developing solution can be improved.

## Claims

1. A circuit for reducing voltage fluctuation and flicker which, when each of a plurality of loads is turned on/off at an arbitrary timing, is used for supplying electrical power to at least one of the loads, comprising:
a power supply which supplies electrical power to the loads at a predetermined rated AC voltage;
a zerocross detection circuit which detects zerocross points from a waveform of current of said power supply; and
a switching circuit which, on the basis of the detected zerocross points, effects sampling output and flows electrical power to the loads in accordance with a predetermined pattern in which one cycle of the waveform of current is one unit.

2. A circuit for reducing voltage fluctuation and flicker which, when each of a plurality of loads is turned on/off at an arbitrary timing, is used for supplying electrical power to at least one of the loads, comprising:
a power supply which supplies electrical power to the loads at a predetermined rated AC voltage;
duty setting means which sets duty of each cycle of a waveform of current of said power supply to from 0 % to 100 %; and
a switching circuit which, on the basis of the duty set by said duty setting means, outputs electrical power of at least one of a time in which supply of electrical power to the loads is started and a time in which supply of electrical power to the loads is finished by changing this duty one of continuously and intermittently and flows electrical power to the loads.

3. A circuit for reducing voltage fluctuation and flicker according to claim 1, wherein a Solid-Stade Relay is used in said switching circuit.

4. A circuit for reducing voltage fluctuation and flicker according to claim 2, wherein said duty setting means sets the duty in accordance with the size of variable resistor included in said switching circuit.

5. A circuit for reducing voltage fluctuation and flicker according to claim 2, wherein said duty setting means sets the duty by changing a phase of the waveform of current of said power supply.

6. A circuit for reducing voltage fluctuation and flicker according to claim 2, wherein said switching circuit is a triac circuit.

7. A circuit for reducing voltage fluctuation and flicker according to claim 1, wherein the circuit for reducing voltage fluctuation and flicker is used for controlling the operating force of the loads.

8. A circuit for reducing voltage fluctuation and flicker according to claim 1, wherein the circuit for reducing voltage fluctuation and flicker is used for supplying electrical power to loads which consume a large amount of electrical power in a photosensitive planogrpahic printing plate processing apparatus in which a photosensitive planogrpahic printing plate, onto which images are printed by a printing device, is processed in a processing solution.

9. A circuit for reducing voltage fluctuation and flicker according to claim 8, wherein the loads which consume a large amount of electrical power is a heater which heats a developing solution for developing the photosensitive planogrpahic printing plate and a heater which heats drying air for drying the photosensitive planogrpahic printing plate.

10. A circuit for reducing voltage fluctuation and flicker according to claim 9, wherein the circuit for reducing voltage fluctuation and flicker is used for controlling the amount of heat of each of the heaters which are the loads.
